# FASCICULE DE BREVET EUROPEEN

(11) **EP 2 962 928 B1**
(45) Date de publication et mention de la délivrance du brevet: **12.07.2017**
(21) Numéro de dépôt: 15174525.4
(22) Date de dépôt: 30.06.2015
(51) Int. Cl.: B63B 35/50, B64F 1/18

(54) **PLATEFORME NAVALE**
MARINEPLATTFORM
NAVAL PLATFORM

(30) Priorité: 01.07.2014 FR 1401486
(43) Date de publication de la demande: 06.01.2016
(73) Titulaire: DCNS, 75015 Paris (FR)
(72) Inventeur: MORESVE, Julien, 56311 Lorient Cedex (FR); BRETON, Richard, 56100 LORIENT (FR); PHILIPPE, Serge, 56100 LORIENT (FR)
(74) Mandataire: Lavoix

(56) Documents cités:
- FR-A1- 2 667 570
- FR-A1- 2 727 082
- JP-A- H05 170 191
- US-A- 4 158 885

## Description

La présente invention concerne une plateforme navale comprenant une zone d'appontage destinée à accueillir un aéronef piloté à voilure tournante, associée à un système d'aide à l'appontage de l'aéronef sur la zone d'appontage.

Des exemples de systèmes d'aide à l'appontage sont décrits dans FR 2 727 082 A1 (D1) et JP H05 170191 A (D2) et sont utilisés afin de prendre des précautions particulières et de donner des instructions précises et intelligibles à l'équipage de l'aéronef, pour que celui-ci puisse poser l'aéronef en toute sécurité sur la zone d'appontage de la plateforme, en tenant compte par exemple des mouvements de cette plateforme et des conditions environnementales.

Un tel aéronef correspond, par exemple, à un hélicoptère pour lequel les phases d'appontage sont extrêmement délicates, voire dangereuses, notamment lorsque la mer est formée.

En outre, il est connu pour sécuriser un tel aéronef, une fois celui-ci posé sur la zone d'appontage, d'utiliser des systèmes particuliers tels qu'une grille fixée sur la plateforme navale et qui est destinée à recevoir une tête de harpon d'accrochage reliée à l'aéronef. La position de l'aéronef est ainsi sécurisée quel que soit les mouvements de la plateforme.

Dans le domaine des plateformes navales et de l'aide à l'appontage d'un aéronef, il est connu de la technologie «asist» de la société INDAL, un système d'aide à l'appontage installé sur une plateforme et qui comprend un panneau muni d'ampoules qui représente la zone d'appontage. Le panneau a des dimensions réduites par rapport à la zone d'appontage et permet d'afficher au pilote, de manière approximative, les positions longitudinale et transversale de l'aéronef par rapport à la zone d'appontage. Cependant, avec un tel système d'aide à l'appontage la manoeuvre d'appontage reste difficile et dangereuse à effectuer pour le pilote de l'aéronef.

Le but de l'invention est donc de proposer un système d'aide à l'appontage d'un aéronef piloté à voilure tournante permettant de simplifier la manoeuvre d'appontage et de la rendre plus sécuritaire.

A cet effet, l'invention a pour objet une plateforme navale selon la revendication 1.

Grâce à l'invention, l'équipage de l'aéronef acquiert une information d'altitude tout au long de la phase d'appontage de l'aéronef et un pilote est propre à adapter l'altitude de l'aéronef en fonction de l'information d'altitude affichée par les premiers moyens d'affichage. Le pilote de l'aéronef est donc apte à modifier la position de l'aéronef en fonction des informations affichées par les premiers moyens d'affichage commandés par les moyens de commande. Aucun opérateur n'est nécessaire sur la plateforme afin de guider l'équipage lors de l'appontage de l'aéronef. Une telle plateforme permet de faciliter la manoeuvre d'appontage de la rendre plus sécuritaire et de garantir un appontage « en douceur » de l'aéronef, afin que celui-ci ne vienne pas se poser sur la zone d'appontage avec une vitesse verticale trop élevée.

Selon des aspects avantageux de l'invention, la plateforme navale comprend en outre une ou plusieurs des caractéristiques optionnelles des revendications 2 à 21 :
L'invention sera mieux comprise et d'autres avantages de celle-ci apparaîtront plus clairement à la lumière de la description qui va suivre, donnée uniquement à titre d'exemple non limitatif, et faite en se référant aux dessins annexés sur lesquels :
   - la figure 1 représente une vue schématique en perspective d'un aéronef en phase d'approche d'une plateforme navale,
   - la figure 2 est une vue détaillée à grande échelle d'une plage arrière de la plateforme navale de la figure 1, et
   - la figure 3 représente un schéma synoptique illustrant la structure et le fonctionnement d'un système d'aide à l'appontage associé à la plage arrière de la figure 2.

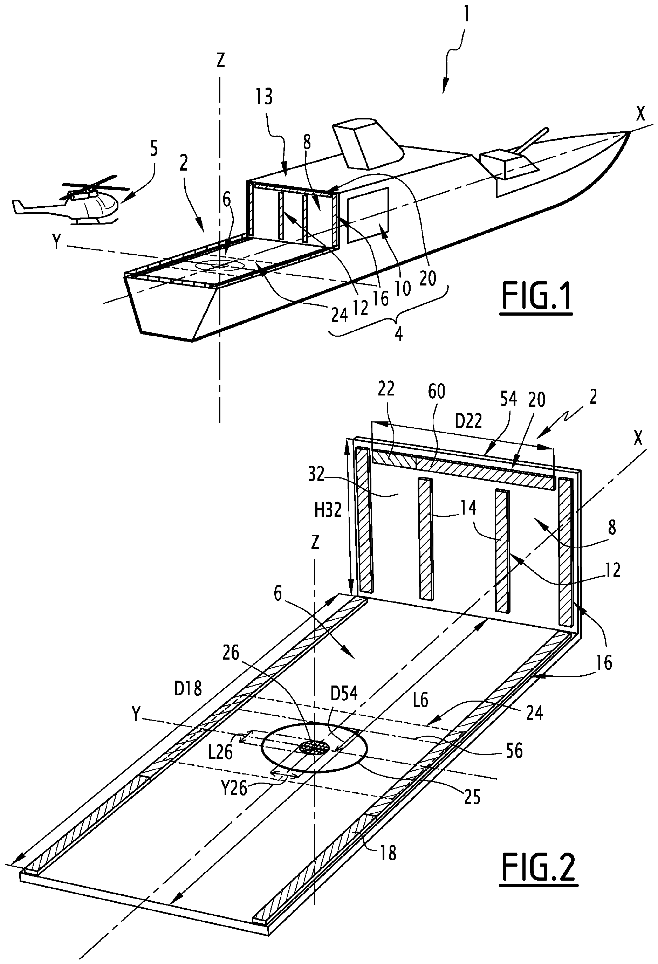

La plateforme navale 1, illustrée à la figure 1, comprend une plage arrière 2 et un système 4 d'aide à l'appontage d'un aéronef 5 piloté à voilure tournante.

On note X, Y et Z des axes longitudinal, respectivement transversal, respectivement vertical de la plateforme 1.

La plage arrière 2 comprend une zone d'appontage 6 et un hangar 8 destiné à recevoir l'aéronef 5 une fois que celui-ci a apponté sur la zone d'appontage 6.

Le système d'aide à l'appontage 4 comporte une unité de traitement 10 et un premier dispositif 12 d'affichage d'une information d'altitude 14 relative à l'altitude de l'aéronef 5 par rapport à la zone d'appontage 6.

Le système d'aide à l'appontage 4 comprend également un deuxième dispositif 16 d'affichage d'une information longitudinale 18 relative à la position longitudinale de l'aéronef 5 par rapport à la zone d'appontage 6 et un troisième dispositif 20 d'affichage d'une information transversale 22 relative à la position transversale de l'aéronef 5 par rapport à la zone d'appontage 6.

Le système 4 comprend, en outre, un quatrième dispositif 24 d'affichage d'un cercle 25 de posé délimitant une zone de réception de l'aéronef 5 sur la zone d'appontage 6.

L'aéronef 5 est par exemple un hélicoptère piloté par un équipage et adapté pour se poser sur la zone d'appontage 6.

La zone d'appontage 6 est par exemple munie d'une grille d'appontage 26 classique adaptée pour coopérer avec une tête de harpon, non représentée sur la figure 1, de l'aéronef 5. Plus précisément, lors de l'appontage de l'aéronef 5, celui-ci est adapté pour se poser sur la grille d'appontage 26 afin de permettre la sécurisation du posé de l'aéronef 5 sur cette grille, par exemple en utilisant un harpon d'ancrage muni de la tête de harpon.

Le hangar 8 comprend une face formant une cloison 32 de superstructure de la plateforme disposée globalement perpendiculairement à la zone d'appontage 6 et en regard de la zone d'appontage 6.

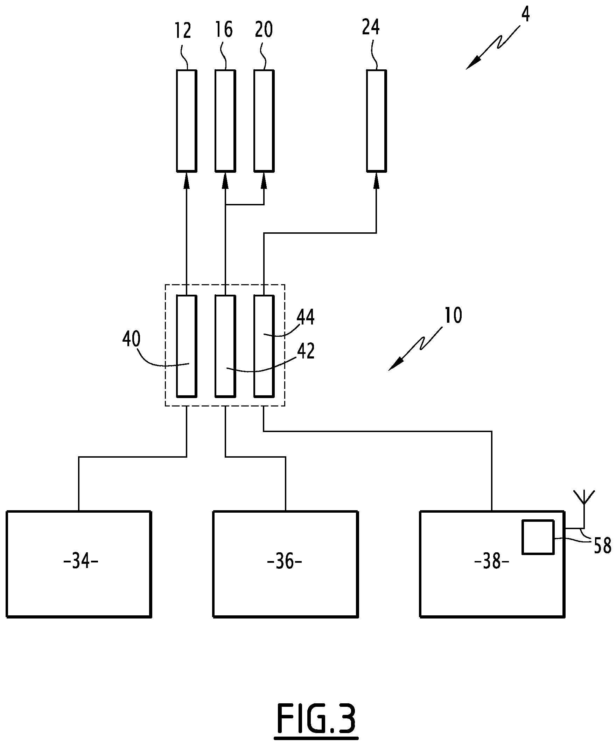

Comme présenté à la figure 3, l'unité de traitement 10 comprend des moyens 34 de détermination de la position de l'aéronef 5 par rapport à la zone d'appontage 6, c'est-à-dire de détermination de l'altitude et des positions longitudinale et transversale de l'aéronef 5.

L'unité de traitement 10 comprend, en outre, un organe 36 d'analyse des mouvements de la plateforme 1 et de la zone d'appontage 6 et un organe 38 d'identification du type du prochain aéronef 5 destiné à apponter sur la zone d'appontage 6.

L'unité de traitement 10 comprend également des premiers moyens 40 de commande du premier dispositif d'affichage 12, des deuxièmes moyens 42 de commande du deuxième 16 et du troisième 20 dispositifs d'affichage et des troisièmes moyens 44 de commande du quatrième dispositif d'affichage 24.

Le premier dispositif d'affichage 12 de l'information d'altitude 14 est placé à proximité de la zone d'appontage 6 et adapté pour que l'information d'altitude 14 soit visible par l'équipage de l'aéronef 5. Le premier dispositif d'affichage 12 est adapté pour afficher l'information d'altitude 14 selon une direction globalement perpendiculaire à la zone d'appontage 6, c'est-à-dire suivant l'axe vertical Z. Plus précisément, le premier dispositif d'affichage 12 est, par exemple, configuré pour afficher sur la cloison 32 deux premières lignes lumineuses, correspondant à l'information d'altitude 14 et s'étendant suivant l'axe vertical Z, c'est-à-dire perpendiculairement à la zone d'appontage 6. Le premier dispositif d'affichage 12 est adapté pour afficher l'information lumineuse d'altitude 14 avec des couleurs différentes. Le premier dispositif d'affichage 12 est adapté pour afficher les deux premières lignes lumineuses de part et d'autre d'un axe central X de la plateforme 1 confondu avec l'axe longitudinal X sur les figures 1 et 2 et portant donc la même référence.

L'information d'altitude 14 est une information lumineuse d'altitude 14 commandable en intensité et en couleur via les premiers moyens de commande 40.

L'information d'altitude 14 est représentée par les premières lignes lumineuses.

En variante, le premier dispositif d'affichage 12 est configuré pour afficher une seule première ligne lumineuse ou plus de deux premières lignes lumineuses.

Le deuxième dispositif d'affichage 16 est également placé à proximité de la zone d'appontage 6 et adapté pour que l'information longitudinale 18 soit visible par l'équipage de l'aéronef 5.

Plus précisément, le deuxième dispositif d'affichage 16 est, par exemple, configuré pour afficher l'information longitudinale 18 à la fois sur la cloison 32 et sur la zone d'appontage 6.

Ainsi, le deuxième dispositif d'affichage 16 est configuré pour afficher deux deuxièmes lignes lumineuses, correspondant chacune à l'information longitudinale 18, avec chaque deuxième ligne lumineuse qui est positionnée sur le pourtour de la plage arrière 2, de part et d'autre de l'axe central X et parallèlement à un premier plan qui comprend les axes longitudinal X et vertical Z.

Le deuxième dispositif d'affichage 16 est adapté pour que l'information longitudinale 18, c'est-à-dire chaque deuxième ligne lumineuse, s'étende, suivant une direction parallèle à l'axe longitudinal X, sur une distance D18 comprise entre 20% et 100% de la longueur de la zone d'appontage 6, de préférence entre 50% et 100% de la longueur de la zone d'appontage 6.

Le deuxième dispositif d'affichage 16 est également adapté pour que l'information longitudinale 18, c'est-à-dire chaque deuxième ligne lumineuse, s'étende suivant une direction parallèle à l'axe vertical Z, le long de la cloison 32, sur une distance comprise entre 20% et 100% de la hauteur H32 de la cloison 32, mesurée parallèlement à l'axe vertical, de préférence entre 50% et 100% de la hauteur H32 de la cloison 32.En variante, le deuxième dispositif d'affichage 16 est configuré pour afficher l'information longitudinale uniquement sur la zone d'appontage 6.

L'information longitudinale 18 est une information lumineuse et est affichée via le deuxième dispositif d'affichage 16. L'information longitudinale 18 s'étend essentiellement parallèlement à un plan comprenant l'axe longitudinal X et l'axe vertical Z. L'information longitudinale 18 est représentée par les deuxièmes lignes lumineuses.

Le troisième dispositif d'affichage 20 est également placé à proximité de la zone d'appontage 6 et il est adapté pour que l'information transversale 22 soit visible par l'équipage de l'aéronef 5.

Plus précisément, le troisième dispositif d'affichage 20 est configuré pour afficher l'information transversale 22 sur la cloison 32. Le troisième dispositif d'affichage 20 est, par exemple, configuré pour afficher une troisième ligne lumineuse, correspondant à l'information transversale 22, sur la cloison 32 et, plus précisément, le long d'un bord 54 de la cloison 32 s'étendant à l'opposé de la zone d'appontage 6 et parallèlement à l'axe transversal Y.

Le troisième dispositif d'affichage 20 est configuré pour que l'information transversale 22, c'est-à-dire la troisième ligne lumineuse s'étende, suivant une direction parallèle à l'axe transversal Y, sur une distance D22 comprise entre 20% et 100% de la largeur de la zone d'appontage 6, de préférence entre 50% et 100% de la largeur de la zone d'appontage 6.

En variante, le troisième dispositif d'affichage 20 est configuré pour que l'information transversale 22 s'étende, suivant une direction parallèle à l'axe transversal Y, sur une distance comprise entre 20% et 100% de la largeur de la cloison 32, de préférence entre 50% et 100% de la largeur de la cloison 32.

En variante, le troisième dispositif d'affichage 20 est, par exemple, configuré pour afficher l'information transversale 22 sur la zone d'appontage 6.

L'information transversale 22 est une information lumineuse et est affichée via le troisième dispositif d'affichage 20. L'information transversale 22 s'étend essentiellement parallèlement à l'axe transversal.

Les informations longitudinale 18 et transversale 22 sont affichées sur le contour de la plage arrière 2, c'est-à-dire sur le contour d'un ensemble formé par la zone d'appontage 6 et la cloison 32.

Les informations longitudinale 18 et transversale 22 correspondent respectivement à des informations lumineuses longitudinale et transversale commandables en intensité et en couleur via les deuxièmes moyens de commande 42.

Le quatrième dispositif d'affichage 24 est adapté pour afficher des cercles de posé 25 de tailles différentes, c'est-à-dire de diamètres différents, autour de la grille d'appontage 26. Chaque cercle de posé 25 délimite une zone d'atterrissage pour l'aéronef 5.

Le quatrième dispositif d'affichage 24 est également propre à afficher pour chaque cercle de posé 25 une ligne transversale 56 correspondante s'étendant parallèlement à l'axe transversal Y et s'étendant, par rapport au centre du cercle de posé, à une distance, mesurée suivant l'axe longitudinal X, supérieure ou égale au rayon du cercle de posé 25 correspondant. La ligne transversale 56 permet, par exemple, d'indiquer à l'équipage de l'aéronef 5 une position longitudinale désirée pour un train d'atterrissage avant de l'aéronef 5.

Les premier 12, deuxième 16, troisième 20 et quatrième 24 dispositifs d'affichage appartiennent au groupe consistant en : des peintures dites électro-chromes commandables en couleur, des barres de LED, des panneaux de LED ou des projecteurs de faisceaux lumineux.

Le quatrième dispositif d'affichage 24 comporte, par exemple, des peintures électro-chrome commandables en couleur, formant sur la zone d'appontage 6 des cercles de posé 25 et des lignes transversales 56 correspondants aux différents types d'aéronefs destinés à apponter, c'est-à-dire aux différentes distances possibles entre le harpon et un train avant ou arrière de l'aéronef 5, suivant le type de l'aéronef.

Une distance longitudinale D54 entre le centre de l'un des cercle de posé 25 et la ligne transversale correspondante 54 est supérieure ou égale à la distance entre le harpon et un train avant de l'aéronef 5 correspondant.

La grille d'appontage 26 est, par exemple, positionnée au centre de la zone d'appontage 6.

Les moyens de détermination 34 sont propres à déterminer l'altitude de l'aéronef 5 par rapport à la zone d'appontage 6, ainsi que les positions longitudinale et transversale de l'aéronef 5 par rapport à la zone d'appontage 6.

Les moyens de détermination 34 sont, par exemple, adaptés pour déterminer l'altitude du harpon par rapport à la grille 26, ainsi que des positions longitudinale et transversale du harpon par rapport à la grille 26.

Les moyens de détermination 34 correspondent, par exemple, à un système de trajectographie classique propre à déterminer la position de l'aéronef 5 par rapport à la zone d'appontage 6 et, par exemple, à la grille 26.

Les moyens de détermination 34 comprennent, par exemple, un système GPS de type RTK (de l'anglais « Real Time Kinematic »). En variante, les moyens de détermination 34 sont en forme d'un système optique laser comprenant des émetteurs, non représentés, sur l'aéronef 5 et une caméra sur la plateforme 1 associée à des moyens de traitement.

L'organe d'analyse 36 des mouvements de la plateforme 1 et de la zone d'appontage 6 est propre à délivrer un ordre d'appontage à l'aéronef 15 et un signal correspondant à cet ordre aux premier 40, deuxième 42 et troisième 44 moyens de commande lorsque des conditions d'appontage prédéterminées sont réunies.

L'organe d'analyse 36 correspond à un système de prédiction des mouvements de la plateforme 1 et de la zone d'appontage 6 qui utilise, par exemple, des mesures de dynamique de la plateforme issues de capteurs formant, par exemple, une centrale inertienne.

L'organe d'analyse 36 est, par exemple, propre à déterminer l'angle de rotation de la plateforme par rapport à l'axe longitudinal X, également appelé angle de roulis.

L'organe d'analyse 36 est plus généralement propre à déterminer l'attitude, la vitesse et l'accélération de la plateforme 1 et à en déduire, par exemple, le mouvement de la plateforme dans les prochaines 5 secondes (s) à 6 s.

Avantageusement, l'organe d'analyse 36 comprend également des systèmes de prédiction supplémentaires, tels que des caméras de vague et est propre à prévoir le mouvement de la plateforme dans un délai compris entre 20 s et 30 s.

L'organe d'identification 38 est propre à récupérer un identifiant du prochain aéronef 5 destiné à apponter. L'organe d'identification 38 comprend des moyens de communication 58 adaptés pour communiquer avec l'aéronef 5 afin de récupérer son identifiant.

En variante, l'organe d'identification 38 comprend des moyens de saisie, par un opérateur, du type de l'aéronef 5 destiné à apponter, c'est-à-dire de l'identifiant de l'aéronef en approche.

Les premier 40, deuxième 42 et troisième 44 moyens de commande sont propres à commander les premier 12, deuxième 16 et troisième 20 dispositifs d'affichage en fonction de la détection, par l'organe d'analyse 36, des conditions d'appontage prédéterminées.

Les premier 40, deuxième 42 et troisième 44 moyens de commande sont propres à commander en intensité et en couleur les premier 12, respectivement deuxième 16 et troisième 20 et respectivement quatrième 24 dispositifs d'affichage.

Les premiers moyens de commande 40 sont propres à commander le premier dispositif d'affichage 12 en fonction de l'altitude déterminée par les moyens de détermination 34, pour indiquer l'altitude de l'aéronef 5 à l'équipage.

Plus précisément, les premiers moyens de commande 40 sont propres à commander la longueur de l'information lumineuse d'altitude 14 et donc des deux premières lignes lumineuses, affichées par le premier dispositif d'affichage 12, en fonction de l'altitude déterminée par l'organe de détermination 34.

Les premiers moyens de commande 40 sont, par exemple, propres, en réponse au passage de l'aéronef en dessous d'un seuil d'altitude prédéterminé par rapport à la zone d'appontage, à commander les premiers moyens d'affichage 12 pour que les premières lignes lumineuses 46 s'étendent sur une longueur sensiblement égale à l'altitude de l'aéronef déterminée par les moyens de détermination 34.

Les premiers moyens de commande 40 sont propres à commander l'affichage de l'information lumineuse d'altitude 14 avec une première couleur, telle que du rouge, du orange ou du jaune lorsque l'organe d'analyse 36 détecte que les conditions d'appontage prédéterminées ne sont pas réunies, et avec une deuxième couleur, telle que du vert, lorsque l'organe d'analyse 36 détecte que les conditions d'appontage prédéterminés sont réunis.

Les premiers moyens de commande 40 sont propres à adapter la longueur de chaque première ligne lumineuse en fonction de l'angle de roulis déterminé par les moyens d'analyse 36, pour matérialiser un horizon artificiel virtuel pour l'équipage de l'aéronef.

Les premiers moyens de commande 40 sont également propres à commander le premier dispositif d'affichage 12 pour que l'information lumineuse d'altitude 14 soit animée d'un mouvement périodique, vers la zone d'appontage 6, suivant une direction globalement perpendiculaire à la zone d'appontage 6. Plus précisément les premiers moyens de commande 40 sont aptes à commander l'animation en mouvement de l'information d'altitude 14 en fonction des positions longitudinale et transversale de l'aéronef 5.

L'information lumineuse d'altitude 14 et donc chaque ligne lumineuse correspond alors, par exemple, à une ligne discontinue, c'est-à-dire à des pointillés animés en mouvement vers la zone d'appontage 6. La hauteur de la ligne discontinue mesurée, suivant l'axe vertical Z, est alors fonction de l'altitude déterminée par les moyens de détermination 34. Les pointillés sont animés en mouvement le long de la cloison 32 en direction de la zone d'appontage 6 avec une période, par exemple, égale à 2 s.

Les deuxièmes moyens de commande 42 commandent les deuxième 16 et troisième 20 dispositifs d'affichage en fonction des positions longitudinale et transversale déterminées par les moyens de détermination 34.

Plus précisément les deuxièmes moyens de commande 42 sont adaptés pour calculer un écart longitudinal et un écart transversal entre les positions longitudinale, respectivement transversale déterminées et des positions longitudinale respectivement transversale désirées pour l'aéronef 5 par rapport à la zone d'appontage 6.

Les deuxièmes moyens de commande 42 sont également configurés pour commander les deuxième 16 et troisième 20 dispositifs d'affichage en fonction des écarts longitudinal et transversal calculés, pour faire percevoir ceux-ci à l'équipage de l'aéronef.

Les positions longitudinale, respectivement transversale désirées correspondent par exemple au centre de la grille 26, c'est-à-dire à une position désirée pour le harpon de l'aéronef 5, par rapport à la grille 26, lorsque l'aéronef est positionné sur la zone d'appontage 6.

Les deuxièmes moyens de commande 42 sont propres à commander les deuxième 16 et troisième 20 dispositifs d'affichage pour que les informations longitudinale 18 et transversale 22 comprennent chacune une première partie et une deuxième partie de couleurs différentes. A la figure 2 les couleurs différentes sont représentées par des hachures différentes. Plus précisément, pour les deuxième 16 et troisième 20 dispositifs d'affichage, chaque première partie est illuminée dans la première couleur et chaque deuxième partie est illuminée dans la deuxième couleur, suivant la position longitudinale respectivement transversale de l'aéronef 5 par rapport aux positions longitudinale, respectivement transversale désirées de l'aéronef 5.

La première couleur indique une zone ou une direction par rapport à laquelle l'aéronef doit s'éloigner longitudinalement, respectivement transversalement pour atteindre les positions longitudinale, respectivement transversale désirées.

La deuxième couleur indique une direction ou zone vers laquelle l'aéronef doit se diriger longitudinalement, respectivement transversalement pour atteindre les positions longitudinale, respectivement transversale désirées.

Les deuxièmes moyens de commande 42 sont adaptés pour commander le troisième dispositif d'affichage 20 afin d'afficher un curseur 60 au niveau d'une frontière entre la première et la deuxième couleur au niveau de l'information lumineuse transversale 22.

Les deuxièmes moyens de commande 42 sont adaptés pour commander le deuxième dispositif d'affichage 16 afin que l'information longitudinale 18 soit uniquement de la deuxième couleur si l'écart longitudinal calculé par les deuxièmes moyens de commande 42 est, par exemple, inférieur à 50% de la longueur L26, c'est-à-dire du diamètre, de la grille 26, mesurée suivant l'axe longitudinal X.

De même, les deuxièmes moyens de commande 42 sont adaptés pour commander le troisième dispositif d'affichage 20 afin que l'information transversale 22 soit uniquement de la deuxième couleur si l'écart transversal calculé est, par exemple, inférieur à 50% de la largeur Y26, c'est-à-dire du diamètre, de la de la grille 26, mesurée suivant l'axe longitudinal X.

Ainsi, les deuxièmes moyens de commande 42 comprennent des moyens, non représentés, de calcul des écarts longitudinal et transversal et de comparaison des écarts longitudinal et transversal calculés avec la longueur, respectivement la largeur de la grille 26.

De même, les deuxièmes moyens de commande 42 sont adaptés pour commander les deuxième 16 et troisième 20 dispositifs d'affichage afin que l'information lumineuse longitudinale 18 et l'information lumineuse transversale 22 clignotent, avec, par exemple, une période de 0,5 seconde, si l'écart longitudinal est inférieur à 50% de la longueur de la grille 26 et respectivement si l'écart transversal est inférieur à 50% de la largeur de la grille 26.

Avantageusement, les deuxièmes moyens de commande 42 sont aussi adaptés pour commander le troisième dispositif d'affichage 20 afin que la troisième ligne lumineuse soit animée d'un mouvement périodique parallèlement à l'axe transversal, depuis deux extrémités transversales de la troisième ligne lumineuse vers son centre.

Avantageusement, les premiers moyens de commande 40 sont propres à commander l'animation en mouvement de l'information lumineuse d'altitude 14 lorsque les écarts longitudinal et transversal calculés par les deuxièmes moyens de commande 42 sont inférieurs à 50% de la longueur respectivement de la largeur de la grille 26.

Les troisièmes moyens de commande 44 sont adaptés pour contrôler le quatrième dispositif d'affichage 24 afin d'adapter la position de la ligne transversale 56, suivant l'axe longitudinal X, et le diamètre du cercle de posé affiché 25 en fonction de l'identifiant récupéré par l'organe d'identification 38, c'est-à-dire de l'identification du type d'aéronef 5.

Les troisièmes moyens de commande44 sont propres à rendre visible à l'équipage de l'aéronef 5 le cercle de posé 25 et la ligne transversale 56 correspondant à l'identifiant de l'aéronef 5 récupéré par l'organe de d'identification 38. Plus précisément, les troisièmes moyens de commande 44 sont propres à commander les quatrièmes moyens d'affichage 24 en intensité et en couleur pour rendre visible le cercle de posé 26 et la ligne transversale 28 correspondant au type d'aéronef identifié.

Le fonctionnement d'un tel système d'aide à l'appontage 4 va désormais être présenté ci-dessous en considérant un aéronef 5 en phase d'approche de la plateforme 1, comme présenté à la figure 1, et destiné à apponter sur la zone d'appontage 6.

Lors de la phase d'approche de l'aéronef 5, celui-ci transmet son identifiant vers la plateforme 1. Plus précisément, celui-ci transmet à l'organe d'identification 38 son identifiant, qui correspond au type de l'aéronef.

Les troisièmes moyens de commande 44 commandent alors la position de la ligne transversale 56 et le diamètre du cercle de posé 25 affichés par le quatrième dispositif d'affichage 24 en fonction de l'identifiant. Ainsi, le quatrième dispositif d'affichage 24 rend visible à l'équipage de l'aéronef 5 le cercle de posé 25 et la ligne transversale 56 correspondant au type de l'aéronef 5.

Lors de la phase d'approche, si l'organe d'analyse 36 détecte que les conditions d'appontage prédéterminées sont réunies alors les premier 40 et deuxième 42 moyens de commande commandent l'illumination dans la deuxième couleur des informations affichées par les premier 12, deuxième 16 et troisième 20 dispositif d'affichage. Ainsi les première, deuxième et troisième lignes lumineuses, c'est-à-dire les informations lumineuses d'altitude 14, longitudinale 18 et transversale 22, sont illuminées dans la deuxième couleur pour signaler à l'équipage la possibilité d'apponter.

Puis au bout d'un temps prédéterminé, par exemple compris entre 1 s et 30 s, ou suite à la transmission par un officier de quart de l'ordre d'appontage, les informations lumineuses longitudinale 18 et transversale 22 s'illuminent de deux couleurs différentes avec les premières parties et deuxièmes parties respectivement de la première et de la deuxième couleur, en fonction de la position de l'aéronef par rapport à la zone d'appontage 6, afin de guider l'équipage de l'aéronef vers la zone d'appontage et, plus précisément, vers la grille d'appontage 26.

Puis, lorsque l'aéronef 5 est globalement à la position longitudinale désirée, c'est à dire lorsque l'écart longitudinal est inférieur à 50% de la longueur de la grille d'appontage 26, l'information lumineuse longitudinale 18, c'est-à-dire chaque deuxième ligne lumineuse, est uniquement dans la deuxième couleur et bascule en pointillés clignotants.

De même, lorsque l'aéronef 5 est globalement à la position transversale désirée, c'est à dire lorsque l'écart transversal est inférieur à 50% de la largeur de la grille d'appontage 26, l'information lumineuse transversale 22, c'est-à-dire la troisième ligne lumineuse, est uniquement dans la deuxième couleur.

L'aéronef 5 est alors positionné longitudinalement et transversalement de manière adéquate.

Avantageusement, lorsque l'aéronef 5 est positionné longitudinalement et transversalement de manière adéquate, l'organe d'analyse 36 vérifie que les conditions d'appontage prédéterminées sont réunies. Si l'organe d'analyse 36 détecte que les conditions d'appontage prédéterminées ne sont pas réunis, les informations d'altitude 14, longitudinal 18 et transversal 22 passent dans la première couleur et l'équipage de l'aéronef 5 déplace l'aéronef à distance de la zone d'appontage 6.

Si l'organe d'analyse 36 détecte que les conditions d'appontage prédéterminées sont remplies, alors les informations lumineuses d'altitude 14, longitudinale 18 et transversale 22 sont illuminées de la deuxième couleur et les premières lignes lumineuses s'éclairent en pointillés, de la deuxième couleur, c'est à dire verts, et défilent vers la zone d'appontage afin d'indiquer au pilote de descendre. La hauteur des premières lignes lumineuses correspond, par exemple, à la hauteur du harpon ou du train avant ou d'un train arrière de l'aéronef 5 par rapport à la zone d'appontage 6.

La hauteur des premières lignes lumineuses est régulièrement corrigée du roulis du navire par les premiers moyens de commande 40, c'est-à-dire de l'angle de roulis et mise à jour en fonction de l'altitude de l'aéronef 5 mesurée par les moyens de détermination 34.

Avantageusement, l'information lumineuse transversale 22 s'anime également en pointillés depuis ses extrémités vers son centre.

Avantageusement encore, l'organe d'analyse 36 vérifie régulièrement l'attitude de la plateforme 1 et est adapté pour illuminer toutes les informations lumineuses c'est-à-dire les premières, deuxièmes et troisième lignes lumineuses dans la première couleur si les conditions d'appontage ne sont plus réunies lors de la phase d'appontage.

Le pilote de l'aéronef commande la descente de l'aéronef 5 en fonction de la hauteur des premières lignes lumineuses, pour garantir un appontage « en douceur » de l'aéronef 5 et afin que celui-ci ne vienne pas se poser sur la zone d'appontage 6 avec une vitesse verticale élevée.

Les dispositifs d'affichage 12, 16 et 20 permettent à l'équipage de l'aéronef d'avoir une vue générale de la plateforme 1 et de son environnement tout en prenant connaissance de sa position par rapport à la zone d'appontage 6, aussi bien longitudinalement, que verticalement, que transversalement et en étant informé par le changement de couleur et/ou l'animation en mouvement des informations lumineuses transversale 22, longitudinale 18 et d'altitude 14 de la possibilité d'apponter.

L'information lumineuse d'altitude affichée sur la cloison 32 correspond généralement à la distance verticale entre le harpon et la grille d'appontage 26 et permet ainsi au pilote de connaître en temps réel son altitude par rapport à la zone d'appontage 6.

De la même manière, les informations lumineuses longitudinale 18 et transversale 22 permettent de guider le pilote vers les positions longitudinale et transversale désirées afin que son positionnement soit optimisé préalablement à la pose de l'aéronef sur la zone d'appontage 6, c'est-à-dire à la descente de l'aéronef 5.

Un tel système permet donc de faciliter l'appontage de l'aéronef sur la plateforme 1 tout en optimisant les conditions de sécurité.

Enfin, le système d'aide à l'appontage 4 permet d'adapter les dimensions du cercle de posé 25 et la position de la ligne transversale 56 en fonction du type de l'aéronef 5 fournissant ainsi une plateforme et plus précisément une zone d'appontage 6 adaptée à plusieurs types d'aéronefs 5.

En variante, le système d'aide à l'appontage comprend un cinquième dispositif d'affichage, non représenté, adapté pour afficher une cinquième ligne lumineuse sur le pourtour de la zone d'appontage 6, le long d'un bord arrière de la zone d'appontage 6. Dans cette variante, le système comprend également des quatrièmes moyens de commande du cinquième dispositif d'affichage propre à commander l'illumination de la cinquième ligne dans la première couleur si les conditions d'appontages prédéterminées ne sont pas réunies et dans la deuxième couleurs si les conditions d'appontage prédéterminées sont réunies.

Les variantes envisagées ci-dessus sont propres à être combinées entre elles totalement ou partiellement, pour donner lieu à d'autres modes de réalisation.

## Revendications

1. Plateforme navale (1) comprenant une zone d'appontage (6) destinée à accueillir un aéronef (5) piloté à voilure tournante associée à un système (4) d'aide à l'appontage de l'aéronef sur la zone d'appontage (6), le système (4) comportant :
- des premiers moyens (34) de détermination de l'altitude de l'aéronef (5) par rapport à la zone d'appontage (6),
- des premiers moyens (12) d'affichage d'une information d'altitude (14), relative à l'altitude de l'aéronef par rapport à la zone d'appontage (6), les premiers moyens d'affichage (12) étant placés à proximité de la zone d'appontage (6) et adaptés pour que l'information d'altitude (14) soit visible par l'équipage de l'aéronef (5), et
- des premiers moyens (40) de commande de ces premiers moyens d'affichage (12) en fonction de l'altitude déterminée par les premiers moyens de détermination (34), pour indiquer l'altitude à l'équipage, où l'information d'altitude (14) est une information lumineuse d'altitude, **caractérisée en ce que** les premiers moyens de commande (40) commandent les premiers moyens d'affichage (12) de l'information lumineuse d'altitude en intensité et en couleur.

2. Plateforme selon la revendication 1, **caractérisée en ce que** le système d'aide à l'appontage (4) comprend des moyens d'analyse (36) des mouvements de la plateforme (1) adaptés pour délivrer un ordre d'appontage, en réponse à la réunion de conditions d'appontage prédéterminées, et **en ce que** les premiers moyens de commande (40) commandent les premiers moyens d'affichage (12) en fonction de la détection, par les moyens d'analyse (36), des conditions d'appontage prédéterminées.

3. Plateforme selon la revendication 2, **caractérisée en ce que** les premiers moyens de commande(40) commandent les premiers moyens d'affichage (12) pour afficher l'information lumineuse d'altitude (14) avec une première couleur lorsque les moyens d'analyse (36) détectent que les conditions d'appontage prédéterminées ne sont pas réunies, et avec une deuxième couleur, différente de la première couleur, lorsque les moyens d'analyse (36) détectent que les conditions d'appontage prédéterminées sont réunies.

4. Plateforme selon l'une quelconque des revendications précédentes, **caractérisée en ce que** les premiers moyens de commande (40) commandent les premiers moyens d'affichage (12) pour que l'information lumineuse d'altitude (14) soit animée d'un mouvement périodique, vers la zone d'appontage (6), suivant une direction essentiellement perpendiculaire à la zone d'appontage (6).

5. Plateforme selon l'une quelconque des revendications précédentes, **caractérisée en ce que** les premiers moyens d'affichage (12) de l'information lumineuse d'altitude (14) sont adaptés pour afficher au moins une première ligne lumineuse s'étendant selon une direction essentiellement perpendiculaire à la zone d'appontage (6), la longueur de chaque première ligne lumineuse étant déterminée par les premiers moyens de commande (40) en fonction de l'altitude déterminée par les premiers moyens de détermination (34).

6. Plateforme selon la revendication 5, **caractérisée en ce que**, en réponse au passage de l'aéronef (5) en dessous d'un seuil d'altitude prédéterminé par rapport à la zone d'appontage, les premiers moyens de commande (40) commandent les premiers moyens d'affichage (12) pour que chaque première ligne lumineuse s'étende sur une longueur sensiblement égale à l'altitude de l'aéronef déterminée par les premiers moyens de détermination (34).

7. Plateforme selon les revendications 2 et 5 ou 6, **caractérisée en ce que** les moyens d'analyse (36) sont propres à déterminer l'angle de roulis de la plateforme, **en ce que** les premiers moyens d'affichage (12) de l'information lumineuse d'altitude (14) sont adaptés pour afficher au moins deux premières lignes lumineuses disposées de part et d'autre d'un axe central (X) de la plateforme, et **en ce que** la longueur de chaque première ligne lumineuse est contrôlée par les premiers moyens de commande (40), en fonction de l'angle de roulis déterminé par les moyens d'analyse (36), pour matérialiser un horizon artificiel virtuel pour l'équipage de l'aéronef (5).

8. Plateforme selon l'une quelconque des revendications précédentes, **caractérisée en ce que** le système d'aide à l'appontage (4) comporte des deuxièmes moyens de détermination (34) de positions longitudinale et transversale de l'aéronef (5), par rapport à la zone d'appontage (6), suivant des axes longitudinal (X) et transversal (Y) de la plateforme,
le système d'aide à l'appontage (4) comprenant également :
- des deuxièmes moyens d'affichage (16) d'une information longitudinale (18), relative à la position longitudinale de l'aéronef (5) par rapport à la zone d'appontage (6),
- des troisièmes moyens d'affichage (20) d'une information transversale (22), relative à la position transversale de l'aéronef (5) par rapport à la zone d'appontage (6), les deuxièmes (16) et troisièmes (20) moyens d'affichage étant placés à proximité de la zone d'appontage (6) et adaptés pour que les informations longitudinale (18) et transversale (22) soient visibles par l'équipage de l'aéronef (5), et
- des deuxièmes moyens de commande (42) de ces deuxièmes (16) et troisièmes (20) moyens d'affichage, en fonction des positions longitudinale et transversale déterminées par les deuxièmes moyens de détermination (34), pour indiquer à l'équipage les positions longitudinale et transversale de l'aéronef (5).

9. Plateforme selon la revendication 8, **caractérisée en ce que** les deuxièmes (16) et troisièmes (20) moyens d'affichage sont respectivement adaptés pour que l'information longitudinale (18) s'étende, suivant une direction parallèle à l'axe longitudinal (X) de la plateforme, sur une distance (D18) comprise entre 20% et 100% de la longueur de la zone d'appontage (6), de préférence entre 50% et 100% de la longueur de la zone d'appontage (6) et pour que l'information transversale (22) s'étende, suivant une direction parallèle à l'axe transversal (Y) de la plateforme, sur une distance (D22) comprise entre 20% et 100% de la largeur de la zone d'appontage (6), de préférence entre 50% et 100% de la largeur de la zone d'appontage (6).

10. Plateforme selon la revendication 8 ou 9, **caractérisée en ce que** les deuxièmes moyens de commande (42) sont adaptés pour calculer un écart longitudinal et un écart transversal entre les positions longitudinale respectivement transversale déterminées par les deuxièmes moyens de détermination (34) et des positions longitudinale respectivement transversale désirées pour l'aéronef (5) par rapport à la zone d'appontage (6), et pour commander les deuxièmes (16) et troisièmes (20) moyens d'affichage en fonction des écarts longitudinal et transversal pour faire percevoir ceux-ci à l'équipage de l'aéronef (5).

11. Plateforme selon la revendication 4 et selon la revendication 10, **caractérisée en ce que** la zone d'appontage (6) comprend une grille d'appontage (26) adaptée pour recevoir une tête de harpon d'ancrage solidaire de l'aéronef (5), et **en ce que** les premiers moyens de commande (40) sont propres à commander l'animation en mouvement de l'information lumineuse d'altitude (14), lorsque les écarts longitudinal et transversal calculés par les deuxièmes moyens de commande (42) sont inférieurs à 50% de la longueur, mesurée suivant l'axe longitudinal (X), respectivement de la largeur, mesurée suivant l'axe transversal (Y), de la grille d'appontage (26).

12. Plateforme selon la revendication 10 ou 11, **caractérisée en ce que** les deuxièmes moyens de commande (42) commandent les deuxièmes (16) et troisièmes (20) moyens d'affichage pour que les informations longitudinale (18) et transversale (22) comprennent chacune une première partie illuminée dans une troisième couleur et une deuxième partie illuminée dans une quatrième couleur différente de la troisième couleur, suivant la position longitudinale respectivement transversale de l'aéronef (5) par rapport aux positions longitudinale, respectivement transversale désirées de l'aéronef (5), la troisième couleur indiquant une zone vers laquelle l'aéronef (5) doit se diriger longitudinalement, respectivement transversalement pour atteindre les positions longitudinale, respectivement transversale désirées et la quatrième couleur indiquant une zone par rapport à laquelle l'aéronef (5) doit s'éloigner longitudinalement, respectivement transversalement pour atteindre les positions longitudinale, respectivement transversale désirées.

13. Plateforme selon l'une des revendications 10 à 12, **caractérisée en ce que** la zone d'appontage (6) comprend une grille d'appontage (6) adaptée pour recevoir une tête de harpon d'ancrage solidaire de l'aéronef (5), et **en ce que** les deuxièmes moyens de commande (42) commandent les troisièmes moyens d'affichage (20) afin que l'information transversale (22) soit uniquement de la troisième couleur si l'écart transversal calculé par les deuxièmes moyens de commande (42) est inférieur à 50% de la largeur de la grille d'appontage (26), mesurée suivant l'axe transversal (Y).

14. Plateforme selon l'une des revendications 10 à 13, **caractérisée en ce que** la zone d'appontage (6) comprend une grille d'appontage (26) adaptée pour recevoir une tête de harpon d'ancrage solidaire de l'aéronef (5), et **en ce que** les deuxièmes moyens de commande (42) commandent les deuxièmes moyens d'affichage (16) afin que l'information longitudinale (18) soit uniquement de la troisième couleur si l'écart longitudinal calculé par les deuxièmes moyens de commande (42) est inférieur à 50% de la longueur de la grille d'appontage (26), mesurée suivant l'axe longitudinal (X).

15. Plateforme selon l'une des revendications 8 à 14, **caractérisée en ce que** les troisièmes moyens d'affichage (20) de l'information transversal (22) sont adaptés pour afficher au moins une ligne lumineuse supplémentaire s'étendant selon l'axe transversal (Y) de la plateforme, et **en ce que** les deuxièmes moyens de commande (42) sont adaptés pour commander les troisièmes moyens d'affichage (20) afin que chaque ligne lumineuse supplémentaire soit animée d'un mouvement périodique parallèlement à l'axe transversal (Y), depuis deux extrémités transversales de la ligne lumineuse supplémentaire, vers son centre.

16. Plateforme selon l'une des revendications 8 à 15, **caractérisée en ce que** les informations longitudinale (18) et transversale (22) sont affichées sur le pourtour de la zone d'appontage (6).

17. Plateforme selon l'une des revendications 8 à 15, **caractérisée en ce que** les informations longitudinale (18) et transversale (22) sont affichées sur le pourtour d'un ensemble formé par la zone d'appontage (6) et une cloison (32) de superstructure de la plateforme en regard de la zone d'appontage (6) et orientée perpendiculairement à la zone d'appontage (6), l'information longitudinale (18) s'étendant essentiellement parallèlement à un plan comprenant l'axe longitudinal (X) et un axe vertical (Z) de la plateforme et l'information transversale (22) s'étendant essentiellement parallèlement à l'axe transversal (Y).

18. Plateforme selon l'une des revendications précédentes, **caractérisée en ce que** le système d'aide à l'appontage comprend :
- des moyens d'identification (38) du type d'aéronef (5) se présentant à l'appontage,
- des quatrièmes moyens d'affichage (24) d'un cercle de posé (25) délimitant une zone d'atterrissage pour l'aéronef (5) sur la zone d'appontage (6), et
- des troisièmes moyens de commande (44) adaptés pour commander le rayon du cercle de posé (25) affiché par les quatrièmes moyens d'affichage (24) en fonction de l'identification du type d'aéronef (5) par les moyens d'identification (38).

19. Plateforme selon la revendication 18, **caractérisée en ce que** les quatrièmes moyens d'affichage (24) sont propres à afficher une ligne transversale (56) s'étendant parallèlement à un axe transversal (Y) de la plateforme et s'étendant, par rapport au centre du cercle de posé (25), à une distance, mesurée suivant un axe longitudinal (X) de la plateforme, supérieure ou égale au rayon du cercle de posé et **en ce que** les troisièmes moyens de commande (44) commandent les quatrièmes moyens d'affichage (24) pour adapter la position de la ligne transversale (56), suivant l'axe longitudinal (X), en fonction de l'identification du type d'aéronef (5) par les moyens d'identification (38).

20. Plateforme selon la revendication 19, **caractérisée en ce que** la zone d'appontage (6) comprend une grille d'appontage (26) adaptée pour recevoir une tête de harpon d'ancrage solidaire de l'aéronef (5) et **en ce que** les quatrièmes moyens d'affichage (24) sont propres à afficher le cercle de posé (25) et la ligne transversale (56) de manière à ce que la distance longitudinale entre le centre du cercle de posé (25) et la ligne transversale (56) soit supérieure ou égale à la distance entre le harpon et un train avant ou arrière de l'aéronef (5) destiné à apponter.

21. Plateforme selon la revendication 19 ou 20, **caractérisée en ce que** les troisièmes moyens de commande(44) sont propres à commander les quatrièmes moyens d'affichage (24) en intensité et en couleur pour rendre visibles à l'équipage de l'aéronef (5), le cercle de posé (25) et la ligne transversale (56) correspondants au type d'aéronef (5) identifié par les moyens d'identification (38).

## Patentansprüche

1. Schiffsplattform (1), aufweisend einen Landebereich (6), der vorgesehen ist, um ein rotorgetriebenes Luftfahrzeug (5) aufzunehmen, und der mit einem System (4) zur Unterstützung der Landung des Luftfahrzeugs auf dem Landebereich (6) verbunden ist, wobei das System (4) aufweist:
- erste Mittel (34) zum Ermitteln der Höhe des Luftfahrzeugs (5) in Bezug auf den Landebereich (6),
- erste Mittel (12) zum Anzeigen einer Höheninformation (14) bezüglich der Höhe des Luftfahrzeugs in Bezug auf den Landebereich (6), wobei die ersten Anzeigemittel (12) in der Nähe des Landebereichs (6) angeordnet sind und derart angepasst sind, dass die Höheninformation (14) für die Besatzung des Luftfahrzeugs (5) sichtbar ist, und
- erste Mittel (40) zum Steuern dieser ersten Anzeigemittel (12) in Abhängigkeit von der durch die ersten Mittel zum Ermitteln (34) bestimmten Höhe, um der Besatzung die Höhe anzuzeigen,
wobei die Höheninformation (14) eine leuchtende Höheninformation ist, **dadurch gekennzeichnet,**
**dass** die ersten Steuermittel (40) die ersten Mittel zum Anzeigen (12) der leuchtenden Höheninformation in Bezug auf die Stärke und die Farbe steuern.

2. Plattform gemäß Anspruch 1, **dadurch gekennzeichnet, dass** das System zur Unterstützung der Landung (4) Mittel zum Analysieren (36) der Bewegungen der Plattform (1) aufweist, die angepasst sind, um in Antwort auf die Erfüllung von vorbestimmten Landungsbedingungen eine Landungsaufforderung auszugeben, und dass die ersten Steuermittel (40) die ersten Anzeigemittel (12) in Abhängigkeit vom Erfassen der vorbestimmten Landungsbedingungen durch die Analysemittel (36) steuern.

3. Plattform gemäß Anspruch 2, **dadurch gekennzeichnet, dass** die ersten Steuermittel (40) die ersten Anzeigemittel (12) steuern, um die leuchtende Höheninformation (14) mit einer ersten Farbe anzuzeigen, wenn die Analysemittel (36) erfassen, dass die vorbestimmten Landungsbedingungen nicht erfüllt sind, und mit einer zweiten Farbe anzuzeigen, die sich von der ersten Farbe unterscheidet, wenn die Analysemittel (36) erfassen, dass die vorbestimmten Landungsbedingungen erfüllt sind.

4. Plattform gemäß irgendeinem der vorhergehenden Ansprüche, **dadurch gekennzeichnet, dass** die ersten Steuermittel (40) die ersten Anzeigemittel (12) steuern, damit die leuchtende Höheninformation (14) mit einer periodischen Bewegung in Richtung des Landebereichs (6) entlang einer Richtung angeregt wird, die im Wesentlichen senkrecht zum Landebereich (6) ist.

5. Plattform gemäß irgendeinem der vorhergehenden Ansprüche, **dadurch gekennzeichnet, dass** die ersten Mittel zum Anzeigen (12) der leuchtenden Höheninformation (14) angepasst sind, um mindestens eine erste leuchtende Linie anzuzeigen, die sich entlang einer Richtung erstreckt, die im Wesentlichen senkrecht zum Landebereich (6) ist, wobei die Länge jeder ersten leuchtenden Linie durch die ersten Steuermittel (40) in Abhängigkeit von der Höhe bestimmt wird, die von den ersten Ermittlungsmitteln (34) ermittelt wird.

6. Plattform gemäß Anspruch 5, **dadurch gekennzeichnet, dass** die ersten Steuermittel (40) in Antwort auf das Passieren des Luftfahrzeugs (5) unter einer vorbestimmten Höhenschwelle in Bezug auf den Landebereich die ersten Anzeigemittel (12) derart steuern, dass sich jede erste leuchtende Linie über eine Länge erstreckt, die im Wesentlichen gleich der Höhe des Luftfahrzeugs ist, die von den ersten Ermittlungsmitteln (34) ermittelt wird.

7. Plattform gemäß den Ansprüchen 2 und 5 oder 6,
**dadurch gekennzeichnet, dass** die Analysemittel (36) geeignet sind, den Rollwinkel der Plattform zu ermitteln, dass die ersten Mittel zum Anzeigen (12) der leuchtenden Höheninformation (14) angepasst sind, um mindestens zwei erste leuchtende Linien anzuzeigen, die auf beiden Seiten einer zentralen Achse (X) der Plattform angeordnet sind, und dass die Länge jeder ersten leuchtenden Linie von den ersten Steuermitteln (40) in Abhängigkeit von dem Rollwinkel gesteuert wird, der von den Analysemitteln (36) ermittelt wird, um einen virtuellen künstlichen Horizont für die Besatzung des Luftfahrzeugs (5) zu materialisieren.

8. Plattform gemäß irgendeinem der vorhergehenden Ansprüche, **dadurch gekennzeichnet, dass** das System zum Unterstützen der Landung (4) zweite Mittel zum Ermitteln (34) einer Längs- und einer Querposition des Luftfahrzeugs (5) in Bezug auf den Landebereich (6) entlang der Längsachse (X) und der Querachse (Y) der Plattform aufweist,
wobei das System zum Unterstützen der Landung (4) ferner aufweist:
- zweite Mittel zum Anzeigen (16) einer Längsinformation (18) bezüglich der Längsposition des Luftfahrzeugs (5) in Bezug auf den Landebereich (6),
- dritte Mittel zum Anzeigen (20) einer Querinformation (22) bezüglich der Querposition des Luftfahrzeugs (5) in Bezug auf den Landebereich (6), wobei die zweiten (16) und dritten (20) Mittel zum Anzeigen in der Nähe des Landebereichs (6) angeordnet sind und derart angepasst sind, dass die Längsinformation (18) und die Querinformation (22) für die Besatzung des Luftfahrzeugs (5) sichtbar sind, und
- zweite Mittel zum Steuern (42) dieser zweiten (16) und der dritten Anzeigemittel (20) in Abhängigkeit von der Längsposition und Querposition, die von den zweiten Ermittlungsmitteln (34) ermittelt werden, um der Besatzung die Längsposition und die Querposition des Luftfahrzeugs (5) anzuzeigen.

9. Plattform gemäß Anspruch 8, **dadurch gekennzeichnet, dass** die zweiten (16) und dritten (20) Anzeigemittel jeweils derart angepasst sind, dass sich die Längsinformation (18) entlang einer Richtung parallel zu der Längsachse (X) der Plattform über eine Entfernung (D18) erstreckt, die zwischen 20% und 100% der Länge des Landebereichs (6), vorzugsweise zwischen 50% und 100% der Länge des Landebereichs (6) beträgt, und dass sich die Querinformation (22) entlang einer Richtung parallel zu der Querachse (Y) der Plattform über eine Entfernung (D22) erstreckt, die zwischen 20% und 100% der Breite des Landebereichs (6), vorzugsweise zwischen 50% und 100% der Breite des Landebereichs (6) beträgt.

10. Plattform gemäß Anspruch 8 oder 9, **dadurch gekennzeichnet, dass** die zweiten Steuermittel (42) angepasst sind, um einen Längsabstand und einen Querabstand zwischen der Längsposition bzw. der Querposition, die von den ersten Ermittlungsmitteln (34) ermittelt werden, und einer Längsposition bzw. Querposition zu berechnen, die für das Luftfahrzeug (5) in Bezug auf den Landebereich (6) gewünscht sind, und um die zweiten (16) und dritten (20) Mittel zum Anzeigen in Abhängigkeit von dem Längsabstand und dem Querabstand zu steuern, um zu bewirken, dass diese von der Besatzung des Luftfahrzeugs (5) wahrgenommen werden.

11. Plattform gemäß Anspruch 4 und gemäß Anspruch 10,
**dadurch gekennzeichnet, dass** der Landebereich (6) ein Landegitter (26) aufweist, das angepasst ist, um einen Kopf einer Verankerungsharpune aufzunehmen, die mit dem Luftfahrzeug (5) fest verbunden ist, und dass die ersten Steuermittel (40) geeignet sind, die Bewegungsanregung der leuchtenden Höheninformation (14) zu steuern, wenn der Längsabstand und der Querabstand, die von den zweiten Steuermitteln (42) berechnet werden, kleiner als 50% der Länge, gemessen entlang der Längsachse (X), bzw. der Breite, gemessen entlang der Querachse (Y), des Landegitters (26) sind.

12. Plattform gemäß Anspruch 10 oder 11, **dadurch gekennzeichnet, dass** die zweiten Steuermittel (42) die zweiten (16) und dritten (20) Anzeigemittel derart steuern, dass die Längsinformation (18) und die Querinformation (22) jeweils aufweisen: einen ersten Teil, der in einer dritten Farbe beleuchtet ist, und einen zweiten Teil, der in einer vierten Farbe beleuchtet ist, die sich von der dritten Farbe unterscheidet, entlang der Längsposition bzw. Querposition des Luftfahrzeugs (5) in Bezug auf die gewünschte Längsposition bzw. Querposition des Luftfahrzeugs (5), wobei die dritte Farbe einen Bereich anzeigt, in dessen Richtung sich das Luftfahrzeug (5) in Längsrichtung bzw. in Querrichtung bewegen soll, um die gewünschte Längsposition bzw. Querposition zu erreichen, und wobei die vierte Farbe einen Bereich anzeigt, in Bezug auf welchen sich das Luftfahrzeug (5) in Längsrichtung bzw. Querrichtung entfernen soll, um die gewünschte Längs- bzw. Querposition zu erreichen.

13. Plattform gemäß einem der Ansprüche 10 bis 12,
**dadurch gekennzeichnet, dass** der Landebereich (6) ein Landegitter (6) aufweist, das angepasst ist, um einen Kopf einer Verankerungsharpune aufzunehmen, die mit dem Luftfahrzeug (5) fest verbunden ist, und dass die zweiten Steuermittel (42) die dritten Anzeigemittel (20) steuern, damit die Querinformation (22) ausschließlich in der dritten Farbe ist, wenn der Querabstand, der von den zweiten Steuermitteln (42) berechnet wird, kleiner als 50% der Breite des Landegitters (26) ist, gemessen entlang der Querachse (Y).

14. Plattform gemäß einem der Ansprüche 10 bis 13,
**dadurch gekennzeichnet, dass** der Landebereich (6) ein Landegitter (26) aufweist, das angepasst ist, um einen Kopf einer Verankerungsharpune aufzunehmen, die mit dem Luftfahrzeug (5) fest verbunden ist, und dass die zweiten Steuermittel (42) die zweiten Anzeigemittel (16) steuern, damit die Längsinformation (18) ausschließlich in der dritten Farbe ist, wenn der von den zweiten Steuermitteln (42) berechnete Längsabstand kleiner als 50% der Länge des Landegitters (26) ist, gemessen entlang der Längsachse (X).

15. Plattform gemäß einem der Ansprüche 8 bis 14,
**dadurch gekennzeichnet, dass** die dritten Mittel zum Anzeigen (20) der Querinformation (22) angepasst sind, um mindestens eine zusätzliche leuchtende Linie anzuzeigen, die sich entlang der Querachse (Y) der Plattform erstreckt, und dass die zweiten Steuermittel (42) angepasst sind, um die dritten Anzeigemittel (20) zu steuern, damit jede zusätzliche leuchtende Linie mit einer periodischen Bewegung parallel zu der Querachse (Y) von zwei Querenden der zusätzlichen leuchtenden Linie aus in Richtung ihrer Mitte angeregt wird.

16. Plattform gemäß einem der Ansprüche 8 bis 15,
**dadurch gekennzeichnet, dass** die Längsinformation (18) und die Querinformation (22) am Umfang des Landebereichs (6) angezeigt sind.

17. Plattform gemäß einem der Ansprüche 8 bis 15,
**dadurch gekennzeichnet, dass** die Längsinformation (18) und Querinformation (22) am Umfang einer Einheit angezeigt sind, die durch den Landebereich (6) und eine dem Landebereich (6) zugewandte und senkrecht zu dem Landebereich (6) ausgerichteten Trennwand (32) eines Deckaufbaus der Plattform ausgebildet ist, wobei sich die Längsinformation (18) im Wesentlichen parallel zu einer Ebene erstreckt, die die Längsachse (X) und eine vertikale Achse (Z) der Plattform aufweist, und wobei sich die Querinformation (22) im Wesentlichen parallel zu der Querachse (Y) erstreckt.

18. Plattform gemäß einem der vorhergehenden Ansprüche, **dadurch gekennzeichnet, dass** das System zur Unterstützung der Landung aufweist:
- Mittel zum Identifizieren (38) des Typs des Luftfahrzeugs (5), das sich zum Landen präsentiert,
- vierte Mittel zum Anzeigen (24) eines Positionskreises (25), der einen Bereich zum Landen für das Luftfahrzeug (5) auf dem Landebereich (6) begrenzt, und
- dritte Mittel zum Steuern (44), die angepasst sind, um den Radius des Positionskreises (25), der durch die vierten Anzeigemittel (24) angezeigt ist, in Abhängigkeit von der Identifizierung des Luftfahrzeugtyps (5) durch die Identifikationsmittel (38) zu steuern.

19. Plattform gemäß Anspruch 18, **dadurch gekennzeichnet, dass** die vierten Anzeigemittel (24) geeignet sind, eine Querlinie (56) anzuzeigen, die sich parallel zu einer Querachse (Y) der Plattform erstreckt und sich in Bezug auf die Mitte des Positionskreises (25) in einem Abstand erstreckt, der entlang einer Längsachse (X) der Plattform gemessen wird, der größer oder gleich dem Radius des Positionskreises ist, und dass die dritten Steuermittel (44) die vierten Anzeigemittel (24) steuern, um die Position der Querlinie (56) entlang der Längsachse (X) in Abhängigkeit von der Identifizierung des Luftfahrzeugtyps (5) durch die Identifikationsmittel (38) anzupassen.

20. Plattform gemäß Anspruch 19, **dadurch gekennzeichnet, dass** der Landebereich (6) ein Landegitter (26) aufweist, das angepasst ist, um einen Kopf einer Verankerungsharpune aufzunehmen, die mit dem Luftfahrzeug (5) fest verbunden ist, und dass die vierten Anzeigemittel (24) geeignet sind, den Positionskreis (25) und die Querlinie (56) derart anzuzeigen, dass der Längsabstand zwischen der Mitte des Positionskreises (25) und der Querlinie (56) größer oder gleich dem Abstand zwischen der Harpune und einem Buglandegestell oder Hecklandegestell des Luftfahrzeugs (5) ist, das zum Landen vorgesehen ist.

21. Plattform gemäß Anspruch 19 oder 20, **dadurch gekennzeichnet, dass** die dritten Steuermittel (44) geeignet sind, die vierten Anzeigemittel (24) bezüglich der Stärke und der Farbe zu steuern, um den Positionskreis (25) und die Querlinie (56), die dem Luftfahrzeugtyp (5) entsprechen, der von den Identifikationsmitteln (38) identifiziert wird, für die Besatzung des Luftfahrzeugs (5) sichtbar zu machen.

## Claims

1. Marine platform (1) comprising a landing zone (6) intended to receive a piloted rotary-wing aircraft (5), associated with an aid system (4) for landing the aircraft on the landing zone (6), the system (4) comprising:
- first means (34) of determining the altitude of the aircraft (5) with respect to the landing zone (6),
- first means (12) of displaying altitude information (14), relative to the altitude of the aircraft with respect to the landing zone (6), the first display means (12) being placed in proximity to the landing zone (6) and adapted so that the altitude information (14) is visible to the crew of the aircraft (5), and
- first means (40) of controlling said first display means (12) based on the altitude determined by the first determination means (34), to indicate the altitude to the crew,
or the altitude information (14) is lighted altitude information, **characterised in that** the first control means (40) control the intensity and colour of the first means (12) of displaying the lighted altitude information.

2. Platform according to claim 1, **characterised in that** the landing assistance system (4) comprises means (36) of analysis of the movements of the platform (1) adapted to issue a landing order, in response to meeting predetermined landing conditions, and **in that** the first control means (40) control the first display means (12) based on the detection of predetermined landing conditions by the analysis means (36).

3. Platform according to claim 2, **characterised in that** the first control means (40) control the first display means (12) to display the lighted altitude information (14) with a first colour when the analysis means (36) detect that the predetermined landing conditions are not fulfilled, and with a second colour, different from the first colour, when the analysis means (36) detect that the predetermined landing conditions are fulfilled.

4. Platform according to any one of the preceding claims, **characterised in that** the first control means (40) control the first display means (12) so that the lighted altitude information (14) is animated in periodic movement towards the landing zone (6), along a direction essentially perpendicular to the landing zone (6).

5. Platform according to any one of the preceding claims, **characterised in that** the first display means (12) of lighted altitude information (14) are adapted to display at least a first line of light extending along a direction essentially perpendicular to the landing zone (6), the length of each first line of light being determined by the first control means (40) based on the altitude determined by the first determination means (34).

6. Platform according to claim 5, **characterised in that**, in response to the aircraft (5) passing below a predetermined altitude threshold with respect to the landing zone, the first control means (40) control the first display means (12) so that each first line of light extends over a length essentially equal to the altitude of the aircraft determined by the first determination means (34).

7. Platform according to claims 2 and 5 or 6, **characterised in that** the analysis means (36) are suitable for determining the angle of roll of the platform, **in that** the first display means (12) of the lighted altitude information (14) are adapted to display at least two first lines of light disposed on either side of a central axis (X) of the platform, and **in that** the length of each first line of light is controlled by the first control means (40) based on the angle of roll determined by the analysis means (36), in order to produce a virtual artificial horizon for the crew of the aircraft (5).

8. Platform according to any one of the preceding claims, **characterised in that** the landing assistance system (4) comprises two means (34) of determining longitudinal and transverse positions of the aircraft (5), with respect to the landing zone (6), along longitudinal (X) and transverse (Y) axes of the platform,
the landing assistance system (4) also comprising:
- second means (16) of displaying longitudinal information (18), relative to the longitudinal position of the aircraft (5) with respect to the landing zone (6),
- third means (20) of displaying transverse information (22) relative to the transverse position of the aircraft (5) with respect to the landing zone (6), the second (16) and third (20) display means being placed in proximity to the landing zone (6) and adapted so that the longitudinal (18) and transverse (22) information is visible to the crew of the aircraft (5), and
- second means (42) of controlling said second (16) and third (20) displayed means, based on the longitudinal and transverse positions determined by the second determination means (34), in order to indicate to the crew the longitudinal and transverse positions of the aircraft (5).

9. Platform according to claim 8, **characterised in that** the second (16) and third (20) display means are respectively adapted so that the longitudinal information (18) extends along a direction parallel to the longitudinal axis (X) of the platform, over a distance (D18) falling between 20% and 100% of the length of the landing zone (6), preferably between 50% and 100% of the length of the landing zone (6) and so that the transverse information (22) extends along a direction parallel to the transverse axis (Y) of the platform, over a distance (D22) falling between 20% and 100% of the width of the landing zone (6), preferably between 50% and 100% of the width of the landing zone (6).

10. Platform according to claim 8 or 9, **characterised in that** the second control means (42) are adapted to calculate a longitudinal difference and a transverse difference between the longitudinal, respectively transverse, positions determined by the second determination means (34) and the desired longitudinal, respectively transverse positions for the aircraft (5) with respect to the landing zone (6), and to control the second (16) and third (20) display means based on longitudinal and transverse differences in order to make the crew of the aircraft (5) aware thereof.

11. Platform according to claim 4 and according to claim 10, **characterised in that** the landing zone (6) comprises a landing grid (26) adapted to receive an anchoring harpoon head integral with the aircraft (5), and **in that** the first control means (40) are suitable for controlling the animation in movement of the lighted altitude information (14), when the longitudinal and transverse differences calculated by the second control means (42) are less than 50% of the length, measured along the longitudinal axis (X), respectively of the width, measured along the transverse axis (Y), of the landing grid (26).

12. Platform according to claim 10 or 11, **characterised in that** the second control means (42) control the second (16) and third (20) display means so that the longitudinal (18) and transverse (22) information each comprise a first part illuminated in a third colour and a second part illuminated in a fourth colour different from the third colour, according to the longitudinal, respectively transverse, position of the aircraft (5) with respect to the desired longitudinal, respectively transverse, positions of the aircraft (5), the third colour indicating the zone towards which the aircraft (5) should be directed longitudinally, respectively transversely, to reach the desired longitudinal, respectively transverse, positions and the fourth colour indicating a zone with respect to which the aircraft (5) should move away longitudinally, respectively transversely, to reach the desired longitudinal, respectively transverse, positions.

13. Platform according to any one of claims 10 to 12, **characterised in that** the landing zone (6) comprises a landing grid (6) adapted to receive an anchoring harpoon head integral with the aircraft (5), and **in that** the second control means (42) control the third display means (20) so that the transverse information (22) is only of the third colour if the transverse difference calculated by the second control means (42) is less than 50% of the width of the landing grid (26), measured along the transverse axis (Y).

14. Platform according to any one of claims 10 to 13, **characterised in that** the landing zone (6) comprises a landing grid (26) adapted to receive an anchoring harpoon head integral with the aircraft (5), and **in that** the second control means (42) control the second display means (16) so that the longitudinal information (18) is only of the third colour if the transverse difference calculated by the second control means (42) is less than 50% of the length of the landing grid (26), measured along the longitudinal axis (X).

15. Platform according to any one of claims 8 to 14, **characterised in that** the third display means (20) of the transverse information (22) are adapted to display at least one additional line of light extending along the transverse axis (Y) of the platform, and **in that** the second control means (42) are adapted to control the third display means (20) so that each additional line of light is animated by a periodic movement parallel to the transverse axis (Y), from two transverse ends of the additional line of light towards the centre thereof.

16. Platform according to any one of claims 8 to 15, **characterised in that** the longitudinal (18) and transverse (22) information is displayed on the periphery of the landing zone (6).

17. Platform according to any one of claims 8 to 15, **characterised in that** the longitudinal (18) and transverse (22) information is displayed on the periphery of a complex formed by the landing zone (6) and a superstructure bulkhead (32) of the platform facing the landing zone (6) and oriented perpendicular to the landing zone (6), the longitudinal information (18) extending essentially parallel to a plane comprising the longitudinal axis (X) and a vertical axis (Z) of the platform and the transverse information (22) extending essentially parallel to the transverse axis (Y).

18. Platform according to any one of the preceding claims, **characterised in that** the landing assistance system comprises:
- means (38) of identifying the type of aircraft (5) arriving for the landing,
- fourth means (24) of displaying a touchdown circle (25) delimiting a landing area for the aircraft (5) on the landing zone (6), and
- third control means (44) adapted to control the radius of the touchdown circle (25) displayed by the fourth display means (24) based on the identification of the type of aircraft (5) by the identification means (38).

19. Platform according to claim 18, **characterised in that** the fourth display means (24) are suitable for displaying a transverse line (56) extending parallel to a transverse axis (Y) of the platform and extending, with respect to the centre of the touchdown circle (25), to a distance, measured along a longitudinal axis (X) of the platform, equal to or greater than the radius of the touchdown circle and **in that** the third control means (44) control the fourth display means (24) to adapt the position of the transverse line (56), along the longitudinal axis (X), based on the identification of the type of aircraft (5) by the identification means (38).

20. Platform according to claim 19, **characterised in that** the landing zone (6) comprises a landing grid (26) adapted to receive an anchoring harpoon head integral with the aircraft (5) and **in that** the fourth display means (24) are suitable for displaying the touchdown circle (25) and the transverse line (56) in such a way that the longitudinal distance between the centre of the touchdown circle (25) and the transverse line (56) is equal to or greater than the distance between the harpoon and the forward or aft landing gear of the aircraft (5) intending to land.

21. Platform according to claim 19 or 20, **characterised in that** the third control means (44) are suitable for controlling the intensity and colour of the fourth display means (24) to make visible to the crew of the aircraft (5) the touchdown circle (25) and the transverse line (56) corresponding to the type of aircraft (5) identified by the identification means (38).
